# FASCICULE DE BREVET EUROPEEN

(11) **EP 2 998 208 B1**
(45) Date de publication et mention de la délivrance du brevet: **05.07.2017**
(21) Numéro de dépôt: 15184863.7
(22) Date de dépôt: 11.09.2015
(51) Int. Cl.: B62J 23/00, B62J 33/00, B62K 21/26

(54) **DISPOSITIF DE MAINTIEN D'UN FOURREAU DE PROTECTION D'UNE MAIN SUR LA POIGNÉE D'UN GUIDON DE MOTOCYCLE**
VORRICHTUNG ZUR BEFESTIGUNG EINER SCHUTZUMMANTELUNG EINER HAND AUF DEM GRIFF DES LENKERS EINES MOTORRADS
DEVICE FOR HOLDING A PROTECTIVE SHEATH OF A HAND ON THE GRIP OF A MOTORCYCLE HANDLEBAR

(30) Priorité: 16.09.2014 FR 1458733
(43) Date de publication de la demande: 23.03.2016
(73) Titulaire: TROPHY, 78420 Carrieres-sur-Seine (FR)
(72) Inventeur: AMIOT, Cyril, 61220 La Coulonche (FR); CANTIN, Dominique, 61150 Louge sur Maire (FR); PAQUIER, Yannick, 61600 Magny-le-Desert (FR)
(74) Mandataire: Chevalier, Renaud Philippe

(56) Documents cités:
- EP-A1- 2 289 790
- EP-A1- 2 535 246
- EP-A2- 2 006 197

## Description

La présente invention se rapporte à un dispositif de maintien d'un fourreau de protection d'une main sur la poignée d'un guidon de motocycle, ainsi qu'à système associé de protection d'une main sur la poignée d'un guidon de motocycle.

L'invention se situe dans le domaine de la protection contre les intempéries des mains d'un conducteur sur un motocycle équipé d'un guidon, notamment du type motocyclette ou scooter, en positionnant sur chaque poignée du guidon un fourreau propre à loger la main qui tient la poignée. A cet effet, il est nécessaire de prévoir des dispositifs de maintien des fourreaux sur les deux poignées du guidon.

Il est ainsi connu du document EP 2 535 246 d'employer un dispositif de maintien d'un fourreau comprenant un embout de serrage et un socle. L'embout est muni d'au moins deux griffes séparées par des fentes pour crocheter l'extrémité libre de la poignée, avec un lien de serrage qui resserre l'embout sur cette poignée. L'embout est monté par encliquetage sur un socle composé d'une plaque et d'une contreplaque pour prendre en sandwich le fourreau.

Ce dispositif de maintien présente de nombreux inconvénients, dont le principal est celui d'être particulièrement fragile et susceptible de casse. En effet, la présence de plusieurs fentes sur l'embout, qui s'étendent sur toute la longueur de l'embout jusqu'au socle, fragilisent l'embout. En outre, les fixations par encliquetage de l'embout sur le socle et également de la contreplaque du socle sur la plaque, rendent le dispositif propre à se désolidariser et à se démonter en cas de choc.

Il est également connu du document EP 2 289 790 d'employer un dispositif de maintien d'un fourreau de protection d'une main sur la poignée d'un guidon de motocycle, ce dispositif de maintien comprenant un embout de fixation s'étendant selon un axe longitudinal et comprenant successivement :
- une bague proximale présentant :
   - une unique fente parallèle à l'axe longitudinal, s'étendant sur toute la longueur de la bague et ménagée en partie inférieure de la bague,
   - une gorge proximale périphérique s'étendant sur le pourtour de la bague proximale ;
- une enveloppe arquée prolongeant la bague proximale sur sa partie supérieure, cette enveloppe étant ouverte dans la continuité de la fente de la bague proximale ;
- une platine distale s'étendant transversalement à l'axe longitudinal et disposée de manière solidaire au bout de l'enveloppe, à l'opposé de la bague proximale, cette platine distale supportant un système d'ancrage du fourreau ;

Le dispositif de maintien du document EP 2 289 790 comprend en outre un organe de serrage propre à s'engager sur la gorge proximale de la bague proximale afin de maintenir la bague proximale serrée sur la poignée. Ce dispositif de maintien n'offre cependant aucune flexibilité, de sorte que la bague proximale se présente plutôt sous la forme d'une demi-bague avec une fente très large, limitant ainsi la tenue sur la poignée.

La présente invention a pour but de résoudre ces inconvénients en proposant un dispositif de maintien fiable et robuste.

A cet effet, elle propose un dispositif de maintien d'un fourreau de protection d'une main sur la poignée d'un guidon de motocycle, ce dispositif de maintien comprenant un embout de fixation s'étendant selon un axe longitudinal et comprenant successivement :
- une bague proximale présentant :
   - une unique fente parallèle à l'axe longitudinal, s'étendant sur toute la longueur de la bague et ménagée en partie inférieure de la bague,
   - une ligne de faiblesse parallèle à l'axe longitudinal et ménagée en partie supérieure de la bague en vis-à-vis de la fente, cette ligne de faiblesse définissant une ligne de déformation élastique privilégiée de la bague dans le sens d'un écartement de la fente,
   - une gorge proximale périphérique s'étendant sur le pourtour de la bague ;
- une enveloppe arquée prolongeant la bague proximale sur sa partie supérieure, cette enveloppe étant ouverte dans la continuité de la fente de la bague proximale ;
- une platine distale s'étendant transversalement à l'axe longitudinal et disposée de manière solidaire au bout de l'enveloppe, à l'opposé de la bague proximale, cette platine distale supportant un système d'ancrage du fourreau ; ce dispositif de maintien comprenant en outre un organe de serrage propre à s'engager sur la gorge proximale de la bague proximale afin de maintenir cette bague proximale serrée sur la poignée.

Ainsi, c'est la bague proximale qui vient se fixer sur l'extrémité de la poignée, en écartant la fente grâce à la déformation autorisée par la ligne de faiblesse, puis en resserrant la bague sur cette extrémité au moyen de l'organe de serrage. Avec la ligne de faiblesse, on contrôle précisément la déformation de la bague proximale pour permettre son insertion autour de l'extrémité de la poignée, sans trop nuire à sa solidité.

Avec une seule fente sur la bague, cette dernière présente une rigidité propre à assurer la robustesse voulue. En outre, l'enveloppe, de préférence pleine, ne présente pas une multitude de fentes qui tendraient à la fragiliser, de sorte que cette enveloppe participe également à la solidité du dispositif de maintien. Enfin, la platine distale est solidaire de l'enveloppe contribuant à améliorer à nouveau la résistance mécanique du dispositif de maintien.

Selon une caractéristique, la bague proximale présente également une gorge distale, située plus proche de l'enveloppe que la gorge proximale, et le dispositif de maintien comprend en outre un collier de serrage antivol propre à s'engager sur la gorge distale de la bague proximale afin de maintenir la bague proximale serrée sur la poignée.

Ainsi, le serrage de la bague proximale sur l'extrémité de la poignée est renforcé et sécurisé grâce à ce collier de serrage antivol.

Avantageusement, la gorge distale est pontée par au moins un collet propre à guider le collier de serrage.

Dans une réalisation particulière, la ligne de faiblesse est constituée d'une ligne de moindre épaisseur par rapport au reste de la bague proximale ou d'une ligne d'amorce de pliage en présentant une section transversale en forme générale de « V ».

Ainsi, on favorise la déformation de la bague proximale le long de cette ligne de faiblesse en prévoyant une réduction de l'épaisseur de la paroi périphérique selon cette ligne, ou une géométrie en « V » qui forme une amorce de pliage.

Avantageusement, le système d'ancrage comporte :
- une douille solidaire de la platine distale et s'étendant parallèlement à l'axe longitudinal, cette douille saillant à l'opposé de l'enveloppe ;
- une butée montée de manière amovible sur la douille.

De cette manière, un anneau du fourreau viendra autour de la douille, sans pour autant pouvoir en sortir car étant bloqué d'un côté par la butée amovible et de l'autre côté par la platine distale, garantissant ainsi un ancrage aisé et robuste du fourreau.

Dans un mode de réalisation particulier, la butée est montée sur la douille au moyen d'un ensemble vis et écrou, cette vis traversant la butée et la douille pour coopérer avec l'écrou.

Selon une possibilité de l'invention, la bague proximale présente une face périphérique interne de laquelle font saillie des crans, ces crans favorisant l'agrippement de la bague proximale sur l'extrémité de la poignée.

Selon une autre possibilité de l'invention, l'enveloppe présente également une ligne de faiblesse parallèle à l'axe longitudinal et ménagée dans l'alignement de la ligne de faiblesse de la bague proximale, pour faciliter la déformation de l'enveloppe si nécessaire lors de l'insertion de la bague proximale autour de l'extrémité de la poignée.

Conformément à une autre caractéristique avantageuse de l'invention, l'embout est constitué d'une pièce monobloc, avec la bague proximale, l'enveloppe et la platine distale réalisées d'un seul tenant, favorisant la solidité de cet embout.

La présente invention concerne également la caractéristique selon laquelle la longueur de l'enveloppe selon l'axe longitudinal est supérieure à celle de la bague proximale.

Avantageusement, l'organe de serrage propre à s'engager sur la gorge proximale de la bague proximale est constitué d'un joint torique, ou joint annulaire fermé, qui permet un serrage rapide et stable.

La bague proximale présente par exemple une extrémité libre biseautée, pour faciliter l'insertion du joint torique sur la gorge proximale.

L'invention se rapporte également à un système de protection d'une main sur la poignée d'un guidon de motocycle, ce système de protection comprenant un dispositif de maintien conforme à l'une quelconque des revendications précédentes, et un fourreau propre à loger la main, ce fourreau étant ancré sur la platine distale du dispositif de maintien.

Dans le cas particulier d'un système de fixation avec douille et butée amovible, le fourreau présente un oeillet engagé autour de la douille et bloqué d'un côté par la butée et de l'autre côté par la platine distale.

D'autres caractéristiques et avantages de la présente invention apparaîtront à la lecture de la description détaillée ci-après, d'un exemple de mise en oeuvre non limitatif, faite en référence aux figures annexées dans lesquelles :

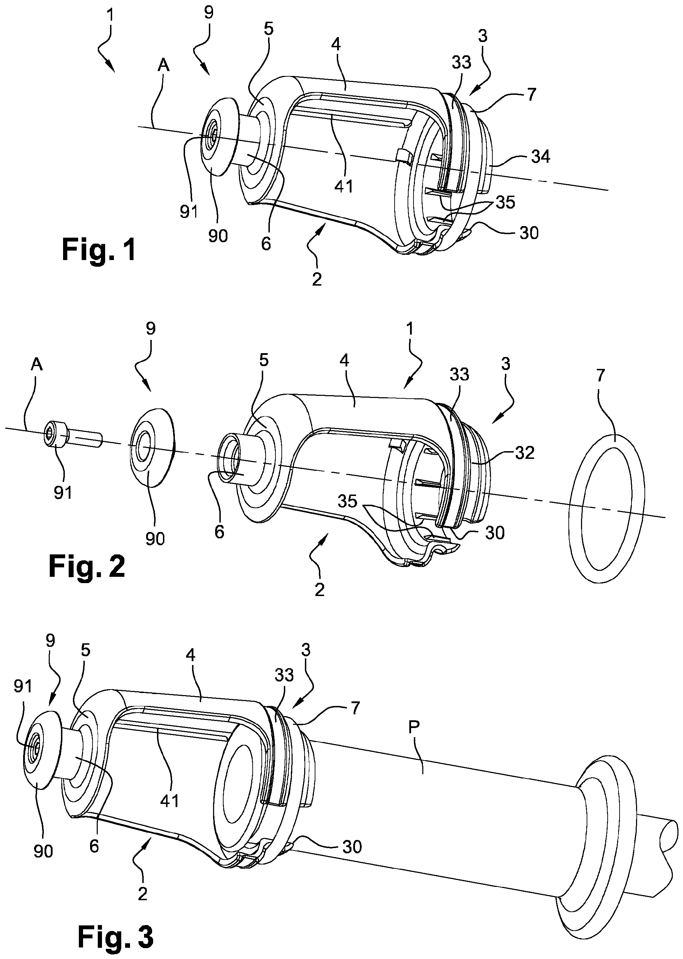

- la figure 1 est une vue schématique en perspective de dessous d'un dispositif de maintien conforme à l'invention, sans le collier de serrage antivol ;
- la figure 2 est une vue schématique en perspective de dessous et éclatée du dispositif de maintien de la figure 1 ;
- la figure 3 est une vue schématique en perspective de dessous du dispositif de maintien de la figure 1 en situation sur une poignée de guidon de motocycle, sans le collier de serrage antivol ;
- les figures 4a à 4f sont des vues schématiques en perspectives du dispositif de maintien de la figure 1 lors de différentes étapes de montage ;
- la figure 5 est une vue en coupe longitudinale du dispositif de maintien de la figure 1.

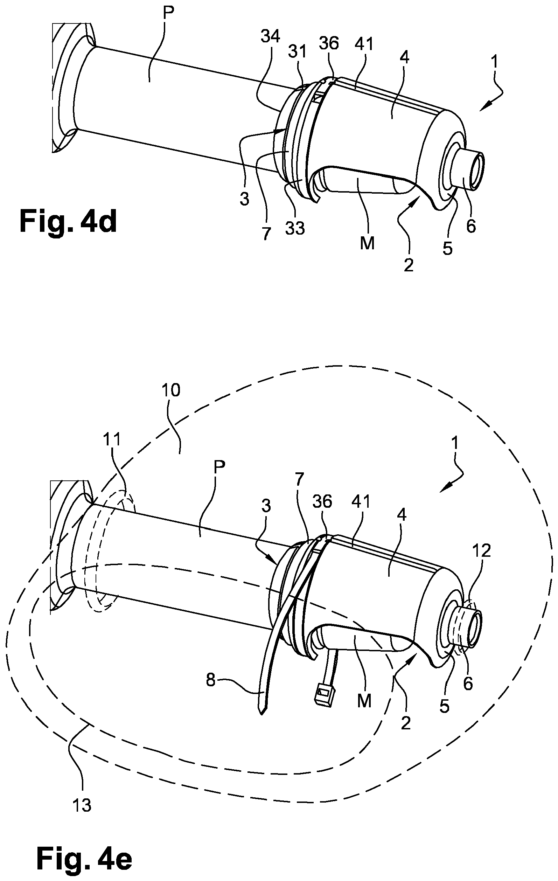

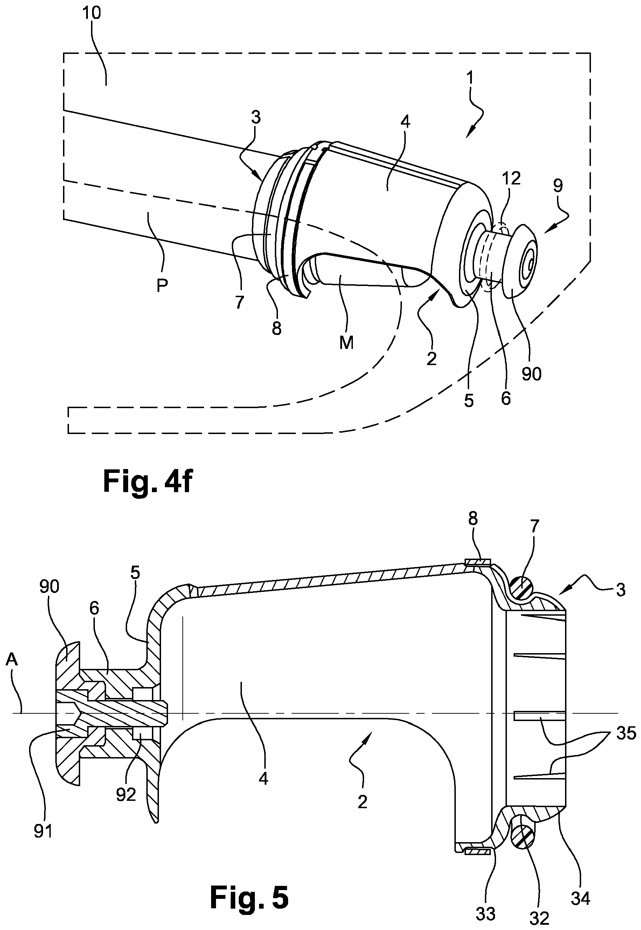

En référence aux figures 4e et 4f, un dispositif de maintien 1 conforme à l'invention a pour fonction de maintenir un fourreau 10 sur l'extrémité d'une poignée P d'un guidon de motocycle.

A cet effet, ce dispositif de maintien 1 comprend un embout 2 de fixation constitué d'une pièce monobloc, autrement dit réalisé d'un seul tenant, par exemple dans un matériau plastique tel que du polypropylène ou du polyamide.

Cet embout 2 s'étend selon un axe longitudinal A et comprend successivement :
- une bague proximale 3 fendue ;
- une enveloppe 4 arquée prolongeant la bague proximale 3 ;
- une platine distale 5 disposée au bout de l'enveloppe 4, l'enveloppe 4 s'étendant entre la bague proximale 3 et la platine distale 5 ;
- une douille 6 faisant saillie de la platine distale 5 à l'opposé de l'enveloppe 4.

L'embout 2 présente une symétrie par rapport à un plan médian incluant l'axe longitudinal A.

La bague proximale 3 présente :
- une unique fente 30 parallèle à l'axe longitudinal A, s'étendant sur toute la longueur de la bague proximale 3 et ménagée en partie inférieure de la bague proximale 3,
- une ligne de faiblesse 31 parallèle à l'axe longitudinal A et ménagée en partie supérieure de la bague proximale en vis-à-vis de la fente 30 ;
- une gorge proximale 32 périphérique s'étendant sur le pourtour de la bague proximale 3 ;
- une gorge distale 33, située plus proche de l'enveloppe 4 que la gorge proximale 32, cette gorge proximale 32 s'étendant ainsi plus près de l'extrémité libre 34 de la bague proximale 3.

La ligne de faiblesse 31 définit une ligne de déformation élastique privilégiée de la bague proximale 3 dans le sens d'un écartement de la fente 30, afin de faciliter l'ouverture de la bague proximale 3 lors de son insertion autour de l'extrémité de la poignée P. La ligne de faiblesse 31 est constituée d'une ligne de moindre épaisseur par rapport au reste de la bague proximale 3, ou d'une ligne d'amorce de pliage en présentant une section transversale en forme générale de « V ».

La bague proximale 3 présente une face périphérique interne prévue pour venir au contact de la poignée P, opposée à sa face périphérique externe dans laquelle sont ménagées les deux gorges 32, 33.

La bague proximale 3 présente des crans 35 faisant saillie de sa face périphérique interne, pour améliorer la tenue de la bague proximale 3 sur la poignée P. Ces crans 35 s'étendent parallèlement à l'axe longitudinal A, et sont régulièrement répartis les uns à la suite des autres.

L'extrémité libre 34 de la bague proximale 3 est biseautée, pour faciliter l'insertion d'un joint torique 7. En effet, le dispositif de maintien 1 comporte en outre un joint torique 7 propre à s'engager sur la gorge proximale 32 de la bague proximale 3 afin de maintenir celle-ci serrée sur la poignée P. Ce joint torique 7 est réalisé dans un matériau élastomère, notamment en éthylène-propylène-diène monomère (EPDM).

La gorge distale 33 est pontée par un collet 36, situé dans en partie supérieure de la bague proximale 3, propre à guider un collier de serrage antivol 8. En effet, le dispositif de maintien 1 comporte en outre un collier de serrage antivol 8 propre à s'engager sur la gorge distale 33 de la bague proximale 3, en passant sous le collet 36, afin de maintenir cette bague proximale 3 serrée sur la poignée P. Ce collier de serrage antivol 8 est notamment du type collier de serrage automatique ou collier Colson.

L'enveloppe 4 présente une forme arquée, et plus précisément une forme semi-cylindrique ou semi-tronconique, ouverte sur toute sa longueur en partie inférieure, dans le prolongement de la fente 30 de la bague proximale 3. Cette enveloppe 4 forme ainsi une paroi semi-cylindrique ou semi-tronconique qui vient dans l'alignement de la partie supérieure de la bague proximale 3, et même dans la continuité de sa ligne de faiblesse 31. D'ailleurs, cette enveloppe 4 présente également une ligne de faiblesse 41 parallèle à l'axe longitudinal A et ménagée dans l'alignement de la ligne de faiblesse 31 de la bague proximale 3.

La ligne de faiblesse 41 définit une ligne de déformation élastique privilégiée de l'enveloppe 4 afin de faciliter l'ouverture de la bague proximale 3 lors de son insertion autour de l'extrémité de la poignée P.

La ligne de faiblesse 41 est constituée d'une ligne de moindre épaisseur par rapport au reste de l'enveloppe 4, ou d'une ligne d'amorce de pliage en présentant une section transversale en forme générale de « V ».

La longueur de l'enveloppe 4 selon l'axe longitudinal A est supérieure à celle de la bague proximale 3. En effet, la bague proximale 3 sert à se fixer sur la poignée P, et l'enveloppe 4 sert à envelopper une masselotte M d'équilibrage lorsqu'une telle masselotte M est montée sur l'extrémité de la poignée P.

La platine distale 5 s'étendant transversalement à l'axe longitudinal A, et plus spécifiquement orthogonalement à cet axe longitudinal A. La platine distale 5 présente une forme circulaire et présente en son centre un trou traversant pour permettre le passage d'une vis 91 décrite ci-après.

La platine distale 5 supporte en effet un système d'ancrage 9 du fourreau 10 qui intègre la douille 6 précitée, ainsi qu'une butée 90 et un ensemble vis 91 et écrou 92.

La douille 6 présente une forme cylindrique et vient pour rappel de matière avec la platine distale 5. La douille 6 est située au centre la platine distale 5 et est alignée avec le trou traversant ménagé au centre de la platine distale 5.

La butée 90 est une pièce de révolution de diamètre ou largeur supérieure au diamètre de la douille 6. La butée 90 est fixée de manière amovible sur l'extrémité libre de la douille 6 au moyen de l'ensemble vis 91 et écrou 92. Comme visible sur la figure 5, la vis 91 traverse la butée 90, avec la tête de la vis 91 qui vient en appui contre cette butée 90, et traverse également la douille 6 et la platine distale 5, afin de coopérer par vissage avec l'écrou 92 disposé sur la platine distale 5.

La suite de la description porte sur le montage du dispositif de maintien 1 et ensuite du fourreau 10 sur la poignée P.

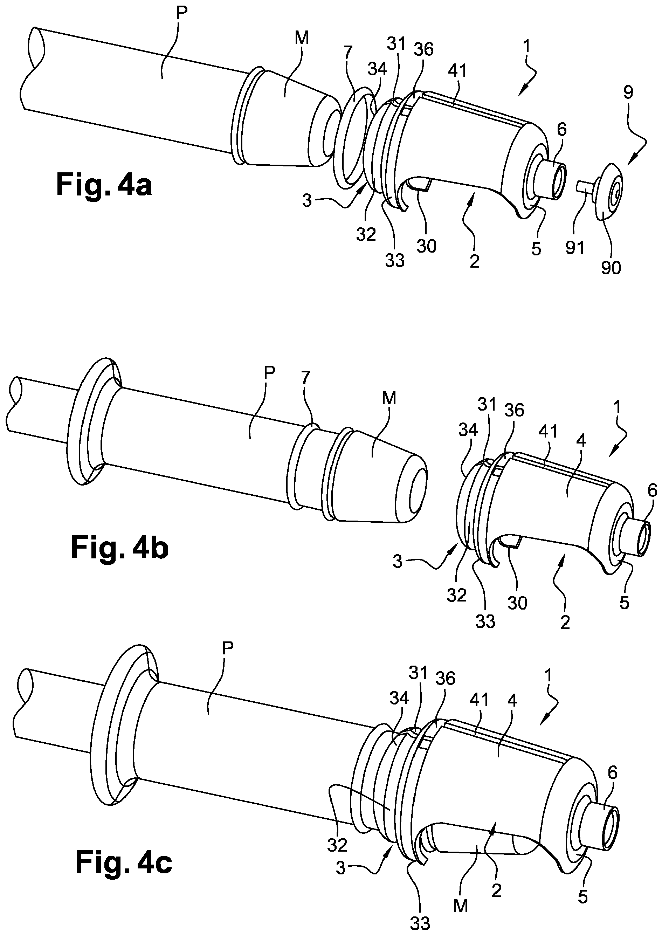

Dans une première étape illustrée sur la figure 4a, on présente d'abord le joint torique 7 au niveau de l'extrémité libre de la poignée P qui, à titre d'exemple non limitatif, supporte une masselotte M d'équilibrage. La butée 90 avec la vis 91 sont illustrés sur la figure 4a mais ne sont pas encore utilisées dans cette première étape.

Dans une deuxième étape illustrée sur la figure 4b, on introduit le joint torique 7 autour de la poignée P, dans une situation d'attente.

Dans une troisième étape illustrée sur la figure 4c, on introduit la bague proximale 3 autour de la poignée P, en écartant la fente 30 selon une déformation élastique facilitée par les lignes de faiblesse 31, 41.

Dans une quatrième étape illustrée sur la figure 4d, on engage le joint torique 7 dans la gorge proximale 32 de la bague proximale 3 ; cet engagement étant facilité par l'élasticité du joint torique 7 et par la forme biseautée de l'extrémité libre 34 de la bague proximale 3.

Dans une cinquième étape illustrée sur la figure 4e, on engage le collier de serrage antivol 8 dans la gorge distale 33, en passant sous le collet 36, puis on ferme de manière irréversible le collier de serrage antivol 8.

Dans une sixième étape toujours illustrée sur la figure 4e, on engage le fourreau 10 (illustré en trait interrompu) autour de la poignée P. A cet effet, le fourreau 10 présente une ouverture proximale 11 et un oeillet 12 opposé. Le fourreau 10 présente également une entrée 13 d'insertion de la main du conducteur. On enfile donc le fourreau 10 d'abord en faisant passer la poignée P dans l'orifice proximale 11, jusqu'à ce que l'oeillet 12 vienne se positionner autour de la douille 6 ; la distance entre l'orifice proximale 11 et l'oeillet 12 étant sensiblement équivalent à la longueur de la poignée, voire supérieure à la longueur de la poignée P pour prendre en compte la longueur de l'embout 2. Le diamètre de l'ouverture proximale 11 est suffisamment grand pour passer le dispositif de maintien 1, tandis que l'oeillet 12 se retrouve bloqué par la platine distale 5 du dispositif de maintien 1.

Dans une septième étape illustrée sur la figure 4f, on fixe la butée 90 sur l'extrémité libre de la douille 6 au moyen de l'ensemble vis 91 et écrou 92, de sorte que l'oeillet 12 du fourreau 10 est engagé autour de la douille et est bloqué d'un côté par la butée 90 et de l'autre côté par la platine distale 5, assurant ainsi le maintien du fourreau 10 sur la poignée P grâce au dispositif de maintien 1.

## Revendications

1. Dispositif de maintien (1) d'un fourreau (10) de protection d'une main sur la poignée (P) d'un guidon de motocycle, ledit dispositif de maintien (1) comprenant un embout (2) de fixation s'étendant selon un axe longitudinal (A) et comprenant successivement :
- une bague proximale (3) présentant :
- une unique fente (30) parallèle à l'axe longitudinal (A), s'étendant sur toute la longueur de la bague proximale (3) et ménagée en partie inférieure de la bague proximale (3),
- une gorge proximale (32) périphérique s'étendant sur le pourtour de la bague proximale (3) ;
- une enveloppe (4) arquée prolongeant la bague proximale (3) sur sa partie supérieure, ladite enveloppe (4) étant ouverte dans la continuité de la fente (30) de la bague proximale (3) ;
- une platine distale (5) s'étendant transversalement à l'axe longitudinal (A) et disposée de manière solidaire au bout de l'enveloppe (4), à l'opposé de la bague proximale (3), ladite platine distale (5) supportant un système d'ancrage (9) du fourreau (10) ;
ledit dispositif de maintien (1) comprenant en outre un organe de serrage (7) propre à s'engager sur la gorge proximale (32) de la bague proximale (3) afin de maintenir ladite bague proximale (3) serrée sur la poignée (P) ;
ledit dispositif de maintien (1) étant **caractérisé en ce que** la bague proximale (3) présente une ligne de faiblesse (31) parallèle à l'axe longitudinal (A) et ménagée en partie supérieure de la bague proximale (3) en vis-à-vis de la fente (30), ladite ligne de faiblesse (31) définissant une ligne de déformation élastique privilégiée de la bague proximale (3) dans le sens d'un écartement de la fente (30).

2. Dispositif de maintien (1) selon la revendication 1, dans lequel la bague proximale (3) présente également une gorge distale (33), située plus proche de l'enveloppe (4) que la gorge proximale (32), et ledit dispositif de maintien (1) comprend en outre un collier de serrage antivol (8) propre à s'engager sur la gorge distale (33) de la bague proximale (3) afin de maintenir ladite bague proximale (3) serrée sur la poignée (P).

3. Dispositif de maintien (1) selon l'une quelconque des revendications précédentes, dans lequel la ligne de faiblesse (31) est constituée d'une ligne de moindre épaisseur par rapport au reste de la bague proximale (3) ou d'une ligne d'amorce de pliage en présentant une section transversale en forme générale de « V ».

4. Dispositif de maintien (1) selon l'une quelconque des revendications précédentes, dans lequel le système d'ancrage (9) comporte :
- une douille (6) solidaire de la platine distale (5) et s'étendant parallèlement à l'axe longitudinal (A), ladite douille (6) saillant à l'opposé de l'enveloppe (4) ;
- une butée (90) montée de manière amovible sur la douille (6).

5. Dispositif de maintien (1) selon la revendication 4, dans lequel la butée (90) est montée sur la douille (6) au moyen d'un ensemble vis (91) et écrou (92), ladite vis (91) traversant la butée (90) et la douille (6) pour coopérer avec l'écrou.

6. Dispositif de maintien (1) selon l'une quelconque des revendications précédentes, dans lequel la bague proximale (3) présente une face périphérique interne de laquelle font saillie des crans (35).

7. Dispositif de maintien (1) selon l'une quelconque des revendications précédentes, dans lequel l'enveloppe (4) présente également une ligne de faiblesse (41) parallèle à l'axe longitudinal (A) et ménagée dans l'alignement de la ligne de faiblesse (31) de la bague proximale (3).

8. Dispositif de maintien (1) selon l'une quelconque des revendications précédentes, dans lequel l'embout (2) est constitué d'une pièce monobloc, avec la bague proximale (3), l'enveloppe (4) et la platine distale (5) réalisées d'un seul tenant.

9. Dispositif de maintien (1) selon l'une quelconque des revendications précédentes, dans lequel la longueur de l'enveloppe (4) selon l'axe longitudinal (A) est supérieure à celle de la bague proximale (3).

10. Dispositif de maintien (1) selon l'une quelconque des revendications précédentes, dans lequel l'organe de serrage (7) propre à s'engager sur la gorge proximale (32) de la bague proximale (3) est constitué d'un joint torique.

11. Dispositif de maintien (1) selon la revendication 10, dans lequel la bague proximale (3) présente une extrémité libre (34) biseautée, pour faciliter l'insertion du joint torique (7) sur la gorge proximale (32).

12. Système de protection d'une main sur la poignée (P) d'un guidon de motocycle, ledit système de protection comprenant un dispositif de maintien (1) conforme à l'une quelconque des revendications précédentes, et un fourreau (10) propre à loger la main, ledit fourreau (10) étant ancré sur la platine distale (5) du dispositif de maintien (1).

13. Système de protection selon la revendication 12, dans lequel le dispositif de maintien (1) est conforme à la revendication 4, et le fourreau (10) présente un oeillet (12) engagé autour de la douille (6) et bloqué d'un côté par la butée (90) et de l'autre côté par la platine distale (5).

## Patentansprüche

1. Vorrichtung zum Festhalten (1) einer Hülse (10) zum Schutz einer Hand auf dem Griff (P) eines Motorradlenkers, wobei die Vorrichtung zum Festhalten (1) ein Befestigungsansatzstück (2) umfasst, das sich entlang einer Längsachse (A) erstreckt und aufeinanderfolgend Folgendes umfasst:
- einen proximalen Ring (3), der Folgendes aufweist:
- einen einzigen Schlitz (30), der parallel zur Längsachse (A) ist, der sich auf der gesamten Länge des proximalen Rings (3) erstreckt und im unteren Teil des proximalen Rings (3) durchgeführt ist,
- eine periphere proximale Aussparung (32), die sich auf dem Umfang des proximalen Rings (3) erstreckt;
- eine gebogene Umhüllung (4), die den proximalen Ring (3) auf seinem oberen Teil verlängert, wobei die Umhüllung (4) in Erweiterung des Schlitzes (30) des poximalen Rings (3) geöffnet ist;
- eine distale Platte (5), die sich quer zur Längsachse (A) erstreckt und auf fest verbundene Weise am Ende der Umhüllung (4) gegenüber dem proximalen Ring (3) angeordnet ist, wobei die distale Platte (5) ein Verankerungssystem (9) der Hülse (10) stützt;
wobei die Vorrichtung zum Festhalten (1) außerdem ein Organ zum Festspannen (7) umfasst, das geeignet ist, auf der proximalen Aussparung (32) des proximalen Rings (3) einzugreifen, um den proximalen Ring (3) auf dem Griff (P) gespannt zu halten;
wobei die Vorrichtung zum Festhalten (1) **dadurch gekennzeichnet ist, dass** der proximale Ring (3) eine Schwächungslinie (31) aufweist, parallel zur Längsachse (A) und im oberen Teil des proximalen Rings (3) gegenüber dem Schlitz (30) durchgeführt, wobei die Schwächungslinie (31) eine bevorzugte elastische Verformungslinie des proximalen Rings (3) in der Richtung einer Entfernung vom Schlitz (30) definiert.

2. Vorrichtung zum Festhalten (1) nach Anspruch 1, wobei der proximale Ring (3) auch eine distale Aussparung (33) aufweist, die sich näher an der Umhüllung (4) als die proximale Aussparung (32) befindet, und die Vorrichtung zum Festhalten (1) außerdem einen Diebstahlschutz-Klemmring (8) umfasst, der geeignet ist, auf der distalen Aussparung (33) des proximalen Rings (3) einzugreifen, um den proximalen Ring (3) auf dem Griff (P) gespannt zu halten.

3. Vorrichtung zum Festhalten (1) nach einem der vorhergehenden Ansprüche, wobei die Schwächungslinie (31) aus einer Linie mit geringerer Dicke mit Bezug auf den Rest des proximalen Rings (3) oder aus einer Sollknickstellenlinie besteht, indem sie einen Querabschnitt mit der allgemeinen Form eines "V" aufweist.

4. Vorrichtung zum Festhalten (1) nach einem der vorhergehenden Ansprüche, wobei das Verankerungssystem (9) Folgendes umfasst:
- eine Buchse (6), die fest mit der distalen Platte (5) verbunden ist und sich parallel zur Längsachse (A) erstreckt, wobei die Buchse (6) an der gegenüber liegenden Seite der Umhüllung (4) vorspringt;
- einen Anschlag (90), der auf abnehmbare Weise auf der Buchse (6) montiert ist.

5. Vorrichtung zum Festhalten (1) nach Anspruch 4, wobei der Anschlag (90) auf der Buchse (6) mit Hilfe einer Schrauben (91)-Schraubenmutter (92)-Einheit montiert ist, wobei die Schraube (91) den Anschlag (90) und die Buchse (6) quert, um mit der Schraubenmutter zusammenzuarbeiten.

6. Vorrichtung zum Festhalten (1) nach einem der vorhergehenden Ansprüche, wobei der proximale Ring (3) eine innere periphere Seite aufweist, aus der Kerben (35) vorspringen.

7. Vorrichtung zum Festhalten (1) nach einem der vorhergehenden Ansprüche, wobei die Umhüllung (4) auch eine Schwächungslinie (41) aufweist, parallel zur Längsachse (A) und in Ausfluchtung mit der Schwächungslinie (31) des proximalen Rings (3) durchgeführt.

8. Vorrichtung zum Festhalten (1) nach einem der vorhergehenden Ansprüche, wobei das Ansatzstück (2) aus einem einzelnen Stück besteht, wobei der proximale Ring (3), die Umhüllung (4) und die distale Platte (5) einstückig hergestellt sind.

9. Vorrichtung zum Festhalten (1) nach einem der vorhergehenden Ansprüche, wobei die Länge der Umhüllung (4) gemäß der Längsachse (A) größer als diejenige des proximalen Rings (3) ist.

10. Vorrichtung zum Festhalten (1) nach einem der vorhergehenden Ansprüche, wobei das Organ zum Festspannen (7), das geeignet ist, auf der proximalen Aussparung (32) des proximalen Rings (3) einzugreifen, aus einem O-Ring besteht.

11. Vorrichtung zum Festhalten (1) nach Anspruch 10, wobei der proximale Ring (3) ein abgeschrägtes freies Ende (34) aufweist, um die Einführung des O-Rings (7) auf der proximalen Aussparung (32) zu erleichtern.

12. System zum Schutz einer Hand auf dem Griff (P) eines Motorradlenkers, wobei das System zum Schutz eine Vorrichtung zum Festhalten (1), das einem der vorhergehenden Ansprüche entspricht, und eine Hülse (10) umfasst, die geeignet ist, die Hand aufzunehmen, wobei die Hülse (10) auf der distalen Platte (5) der Vorrichtung zum Festhalten (1) verankert ist.

13. System zum Schutz nach Anspruch 12, wobei die Vorrichtung zum Festhalten (1) Anspruch 4 entspricht und die Hülse (10) eine Öse (12) aufweist, die um die Buchse (6) eingegriffen ist und auf einer Seite durch den Anschlag (90) und auf der anderen Seite durch die distale Platte (5) blockiert ist.

## Claims

1. A holding device (1) for holding a sheath (10) for protecting a hand on the grip (P) of a motorcycle handlebar, said holding device (1) comprising a fastening mouthpiece (2) extending along a longitudinal axis (A) and comprising successively:
- a proximal ring (3) having:
- a single slot (30) parallel to the longitudinal axis (A), extending over the entire length of the proximal ring (3) and formed in a lower portion of the proximal ring (3),
- a peripheral proximal groove (32) extending over the periphery of the proximal ring (3);
- an arcuate envelope (4) extending the proximal ring (3) on the upper portion thereof, said envelope (4) being open in the continuity of the slot (30) of the proximal ring (3);
- a distal plate (5) extending transversely to the longitudinal axis (A) and disposed secured to the end of the envelope (4), opposite to the proximal ring (3), said distal plate (5) supporting an anchor system (9) of the sheath (10);
said holding device (1) further comprising a clamping member (7) specific to engage on the proximal groove (32) of the proximal ring (3) in order to hold said proximal ring (3) clamped on the grip (P);
said holding device (1) being **characterized in that** the proximal ring (3) has a line of weakness (31) parallel to the longitudinal axis (A) and formed in the upper portion of the proximal ring (3) facing the slot (30), said line of weakness (31) defining a preferred elastic deformation line of the proximal ring (3) in the direction of a spacing of the slot (30).

2. The holding device (1) according to claim 1, wherein the proximal ring (3) also has a distal groove (33), located closer to the envelope (4) than the proximal groove (32), and said holding device (1) further comprises an anti-theft clamping collar (8) specific to engage the distal groove (33) of the proximal ring (3) in order to hold said proximal ring (3) clamped on the grip (P).

3. The holding device (1) according to any one of the preceding claims, wherein the line of weakness (31) is constituted of a line of smaller thickness relative to the rest of the proximal ring (3) or of a folding primer line by having a generally « V »-shaped cross-section.

4. The holding device (1) according to any one of the preceding claims, wherein the anchor system (9) includes:
- a bush (6) secured to the distal plate (5) and extending parallel to the longitudinal axis (A), said bush (6) protruding opposite to the envelope (4);
- a stop (90) removably mounted on the bush (6).

5. The holding device (1) according to claim 4, wherein the stop (90) is mounted on the bush (6) by means of a screw (91) and nut (92) assembly, said screw (91) passing through the stop (90) and the bush (6) in order to cooperate with the nut.

6. The holding device (1) according to any one of the preceding claims, wherein the proximal ring (3) has an inner peripheral face from which notches (35) protrude.

7. The holding device (1) according to any one of the preceding claims, wherein the envelope (4) also has a line of weakness (41) parallel to the longitudinal axis (A) and formed in the alignment of the line of weakness (31) of the proximal ring (3).

8. The holding device (1) according to any one of the preceding claims, wherein the mouthpiece (2) is constituted of a one-piece part, with the proximal ring (3), the envelope (4) and the distal plate (5) made in a single piece.

9. The holding device (1) according to any one of the preceding claims, wherein the length of the envelope (4) along the longitudinal axis (A) is greater than that of the proximal ring (3).

10. The holding device (1) according to any one of the preceding claims, wherein the clamping member (7) specific to engage the proximal groove (32) of the proximal ring (3) is constituted of an O-ring.

11. The holding device (1) according to claim 10, wherein the proximal ring (3) has a beveled free end (34), in order to facilitate the insertion of the O-ring (7) onto the proximal groove (32).

12. A protection system for protecting a hand on the grip (P) of a motorcycle handlebar, said protection system comprising a holding device (1) in accordance with any one of the preceding claims, and a sheath (10) specific to house the hand, said sheath (10) being anchored to the distal plate (5) of the holding device (1).

13. The protection system according to claim 12, wherein the holding device (1) is in accordance with claim 4, and the sheath (10) has an eyelet (12) engaged around the bush (6) and blocked on one side by the stop (90) and on the other side by the distal plate (5).
